# FASCICULE DE BREVET EUROPEEN

(11) **EP 0 685 387 B1**
(45) Date de publication et mention de la délivrance du brevet: **30.07.1997**
(21) Numéro de dépôt: 95401247.2
(22) Date de dépôt: 30.05.1995
(51) Int. Cl.: B63B 35/00, G05D 1/02

(54) **Engin nautique pour effectuer des missions de reconnaissance d'un site, notamment des levés bathymétriques**
Wasserfahrzeug für die Erkundung eines Ortes, insbesondere für Tiefenpeilungen
Watercraft for charting a site, especially for depth soundings

(30) Priorité: 30.05.1994 FR 9406527
(43) Date de publication de la demande: 06.12.1995
(73) Titulaire: PORT AUTONOME DE BORDEAUX, 33075 Bordeaux (FR)
(72) Inventeur: Chaumet-Lagrange, Marc, F-33700 Merignac (FR)
(74) Mandataire: Nony, Michel

(56) Documents cités:
- GB-A- 1 372 174
- US-A- 3 688 252
- US-A- 3 865 062
- US-A- 3 922 632

## Description

La présente invention concerne un engin nautique pour effectuer des missions de reconnaissance d'un site, et notamment des levés bathymétriques par sondage hydrographique, utilisable notamment dans des zones portuaires, côtières ou sur des plans d'eau intérieurs.

On sait qu'il est important de surveiller en permanence l'état des fonds marins, notamment dans les zones portuaires où toute évolution de la topographie sous marine est susceptible de constituer un danger pour la navigation et doit, de ce fait, être parfaitement connue.

En particulier, dans les zones estuariennes où la sédimentation est importante, il est indispensable de détecter toute élévation du niveau de sédiments pour draguer en conséquence le fond des voies de navigation.

D'une manière générale, pour dresser une carte sous-marine, on procède par sondages à l'aide d'une vedette spécialement équipée sur laquelle embarque une petite équipe d'environ quatre personnes.

Une telle vedette comporte un sondeur hydrographique qui détermine la hauteur d'eau présente à l'aplomb de l'embarcation et un système de localisation qui permet d'associer à chaque profondeur relevée sa position sur la carte que l'on désire dresser.

L'heure du levé est également prise en compte pour éliminer la composante liée à la marée (hauteur d'eau mesurée par rapport au zéro des cartes).

Mais cette technique de levé bathymétrique constitue une importante charge financière pour l'autorité maritime responsable de la surveillance des fonds marins.

En outre, la présence d'une équipe humaine à bord de la vedette implique la mise en place de mesures de sécurité rigoureuses.

En particulier, il est impossible d'effectuer des sondages lorsque les conditions de navigation se révèlent trop dangereuses.

Par conséquent, la surveillance des fonds marins est soumise à des aléas qui peuvent nuire à sa fiabilité et empêcher une exploitation optimale des zones de navigation concernées.

La présente invention vise à fournir un appareil simple et économique qui évite les problèmes rencontrés dans la technique connue, notamment les problèmes de coût et de sécurité rappelés ci-dessus.

La présente invention a pour objet un engin nautique pour effectuer des missions de reconnaissance d'un site, notamment des levés bathymétriques par sondages, comportant une coque flottante à l'intérieur de laquelle sont installés des organes moteurs et directionnels, des moyens de localisation géographique de l'engin, des instruments de mesure par exemple de la hauteur d'eau présente sous la coque et des moyens pour prendre en compte chaque mesure en association avec l'heure du levé et la situation géographique de l'engin au moment du levé, caractérisé par le fait qu'il comporte un automate programmable comprenant :
- une mémoire apte à mémoriser un parcours couvrant le site à sonder,
- des moyens de traitement qui analysent le parcours enregistré en tenant compte de la position courante de l'engin nautique et d'informations préenregistrées relatives au site à sonder, et en déduisent des ordres de pilotage de l'engin nautique, et
- une interface reliée d'une part aux moyens de traitement, d'autre part aux organes moteurs et directionnels de l'engin, apte à manoeuvrer ces derniers en fonction des ordres de pilotage issus des moyens de traitement.

L'automate programmable étant en mesure de piloter l'engin nautique selon l'invention de façon complètement autonome, il n'est pas nécessaire qu'une personne se trouve à bord de l'engin lors d'un levé bathymétrique.

Avantageusement, la coque de l'engin nautique selon l'invention est insubmersible.

A cet effet, on peut par exemple utiliser un canot gonflable à coque rigide qui répond à l'exigence d'insubmersibilité tout en étant suffisamment résistant aux chocs. En outre, un tel canot présente un tirant d'eau très faible qui lui permet d'accéder à n'importe quelle zone immergée très peu profonde.

De préférence, l'organe moteur de l'engin nautique selon l'invention est un hydropropulseur, lequel procure une sécurité de fonctionnement optimale et préserve l'environnement des perturbations qu'engendrerait une hélice traditionnelle.

Conformément à l'invention, les moyens de traitement analysent le parcours en fonction d'informations préenregistrées relatives au site qui peuvent être des données géographiques, indiquant par exemple des zones interdites à la navigation, la présence d'épaves, de bouées, d'engins au mouillage, d'obstacles fixes répertoriés ou la vitesse maximale autorisée dans le site.

Dans un mode de réalisation préféré de l'invention, l'engin nautique comporte en outre des capteurs d'environnement qui lui permettent d'acquérir des informations relatives au site en détectant d'éventuels obstacles se présentant sur sa trajectoire.

De tels obstacles peuvent être des objets flottants de toute nature tels que des petites embarcations de pêche ou de plaisance du type planche à voile ou des navires plus importants.

Il peut s'agir également d'obstacles fixes dont la présence n'est pas signalée dans les informations relatives au site à sonder qui sont préenregistrées dans l'automate.

Les capteurs d'environnement utilisables à cet effet peuvent être, d'une part, un radar qui détecte des obstacles de grande dimension situés à plusieurs dizaines de mètres de l'engin nautique et une caméra à infra-rouge qui, associée à des appareillages électroniques de traitement de l'image, peut détecter des obstacles de plus petite dimension situés à quelques mètres seulement de l'engin nautique selon l'invention.

La présence d'une caméra peut également servir à télécommander l'engin nautique selon l'invention depuis un poste de pilotage situé à terre ou sur un autre navire éloigné dudit engin nautique.

Dans ce cas, on peut utiliser une caméra vidéo qui retransmet les images à une station de contrôle où se trouve le poste de pilotage.

Cette fonctionnalité peut s'avérer particulièrement utile dans le cas de manoeuvres complexes qui requièrent l'habileté d'un marin expérimenté.

Dans un mode de réalisation préféré de l'invention, un programmateur relié aux instruments de mesure provoque la prise en compte de mesures à des intervalles de temps prédéterminés.

En fonction de la précision désirée du levé bathymétrique, on choisit cet intervalle de temps plus ou moins long.

Dans un deuxième mode de réalisation de l'invention, le programmateur reçoit en permanence, ou de façon périodique mais avec une très faible période, les mesures relevées par les instruments de mesure. Si l'écart entre une mesure courante et la dernière mesure prise en compte est supérieur à une valeur limite prédéterminée, le programmateur provoque la prise en compte de la mesure courante qui devient alors la dernière mesure prise en compte.

Dans ce mode de réalisation, la valeur limite prédéterminée correspond à la précision du levé bathymétrique.

Ainsi, on évite de prendre en compte inutilement des mesures intermédiaires surabondantes et non significatives.

Dans un troisième mode de réalisation de l'invention, le programmateur est relié aux moyens de localisation géographique de l'engin et provoque la prise en compte de mesures lorsque l'engin nautique se trouve en des points ou dans une zone géographiques déterminés à l'avance.

La détermination de ces points géographiques résulte d'une connaissance a priori du relief du site à sonder. Par exemple, dans des zones a priori fortement accidentées, on prévoit une densité de points plus importante que dans des régions a priori sensiblement planes.

Dans un mode de réalisation préféré de l'invention, le parcours enregistré dans la mémoire de l'automate programmable est matérialisé par une suite de points géographiques que l'engin nautique doit successivement rallier.

Grâce à ce découpage du parcours en segments successifs, les moyens de traitement de l'automate peuvent plus facilement déterminer la trajectoire optimale entre la position courante de l'engin et le prochain point à rallier. De proche en proche, l'engin nautique effectue ainsi fidèlement tout le parcours déterminé à l'avance couvrant le site à sonder.

La répartition des points de ralliement est avantageusement effectuée de manière à balayer toute la surface du site à sonder, par exemple par un quadrillage de la zone en lignes et en colonnes.

Dans un mode de réalisation préféré de l'invention, les instruments de mesure comprennent un sondeur acoustique, monté fixe par rapport à la coque, une plate-forme pourvue d'inclinomètres et d'accéléromètres qui évaluent en permanence le roulis, le tangage et les variations de hauteur de l'engin nautique, ainsi que des moyens de calcul qui tiennent compte de ces paramètres et corrigent en conséquence les valeurs fournies par le sondeur.

Ainsi, toute mesure relevée par le sondeur dans des conditions éventuellement difficiles peut être considérée, après correction, comme n'ayant une erreur que de moins de 0,20 m jusqu'à 10 m et une erreur relative inférieure ou égale à 2 % au-delà.

Afin de limiter d'éventuelles erreurs dues à une trop forte inclinaison de l'engin nautique, les instruments de mesure comportent, selon une variante préférée de ce mode de réalisation, des moyens pour ne retenir que les mesures relevées par le sondeur à l'intérieur d'un cône imaginaire d'axe vertical et d'angle au sommet d'environ 10 à 20 degrés suivant l'angle d'ouverture du faisceau d'émission ultra-sonore du sondeur.

L'engin nautique selon l'invention peut être utilisé en combinaison avec des moyens logistiques qui permettent sa mise à l'eau, son éventuel contrôle et sa récupération en fin de mission.

De tels moyens logistiques peuvent être constitués par un autre navire ou un véhicule terrestre et peuvent par ailleurs servir à plusieurs engins nautiques selon l'invention, effectuant simultanément des missions dans des régions différentes.

Les mesures relevées par l'engin nautique peuvent être enregistrées sur un support présent dans l'engin nautique ou transmises aux moyens logistiques qui analysent et enregistrent les données reçues.

Dans le but de mieux faire comprendre l'invention, on va en décrire maintenant un mode de réalisation donné à titre d'exemple non limitatif de la portée de l'invention, en référence au dessin annexé dans lequel :
- la figure 1 représente en perspective un engin nautique selon un mode de réalisation de l'invention,
- la figure 2 est une vue d'ensemble d'un site sur lequel l'engin nautique de la figure 1 effectue un levé bathymétrique,
- la figure 3 est un schéma bloc des différentes parties fonctionnelles de l'engin nautique de la figure 1, et
- la figure 4 est une représentation d'un parcours à respecter par l'engin nautique de la figure 1.

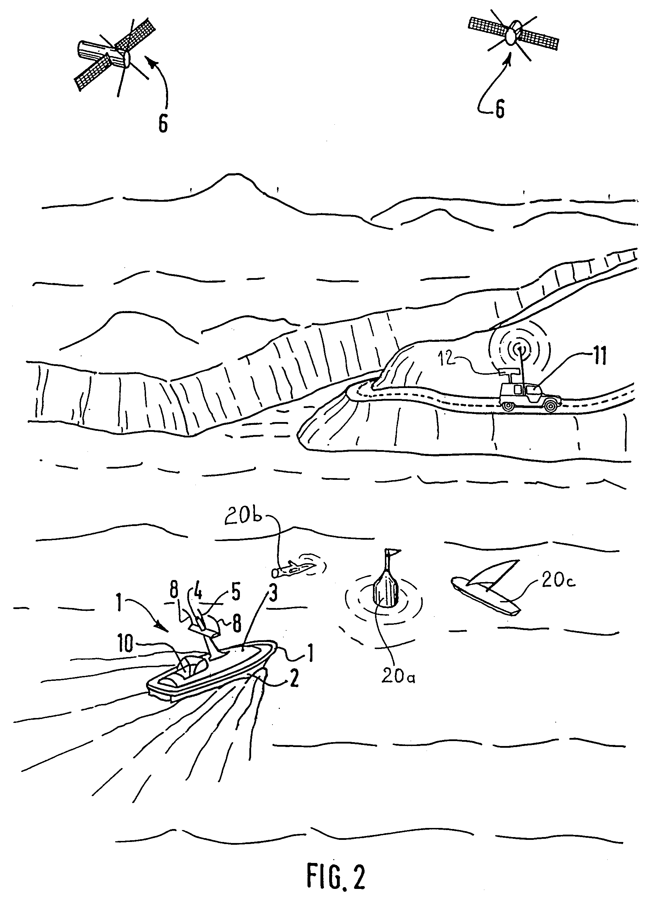

Sur la vue d'ensemble de la figure 2, on a représenté un estuaire au voisinage duquel un engin nautique 1 selon l'invention effectue une mission.

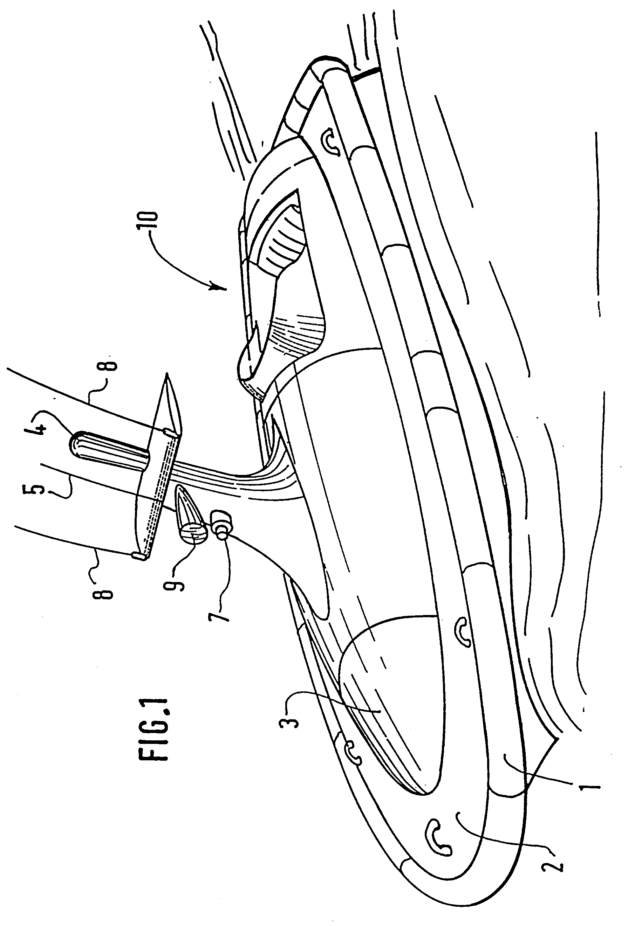

Comme on le voit mieux sur la figure 1, l'engin nautique 1 est constitué par un canot gonflable à coque rigide 2 qui est fermée supérieurement par une couverture étanche au ruissellement 3.

Un mât supporte l'antenne 4 d'un répondeur radar, la double antenne 5 d'un récepteur de localisation d'un système de positionnement du type connu sous le nom de Differential Global Positioning System (DGPS) qui communique avec des satellites géostationnaires 6 et avec une station différentielle de positionnement située à terre, une caméra 7, deux antennes radio VHF et UHF 8 et des signaux ou feux de signalisation 9.

Un poste de pilotage 10 est également prévu pour permettre l'utilisation de l'engin nautique 1 en mode manuel.

Sur le rivage, un véhicule routier 11, apte à communiquer par radio avec l'engin nautique 1, supporte la station différentielle de positionnement du système DGPS qui communique également avec les satellites 6 et fonctionne en relation avec le récepteur de localisation de l'engin nautique et l'antenne 12 d'un radar qui fonctionne avec le répondeur radar de l'engin nautique.

Conformément à l'invention, la coque 2 renferme des instruments de mesure non représentés de la hauteur d'eau présente sous la coque 2, des moyens de prise en compte de chaque mesure en association avec l'heure du levé et la situation géographique de l'engin au moment du levé et un automate programmable.

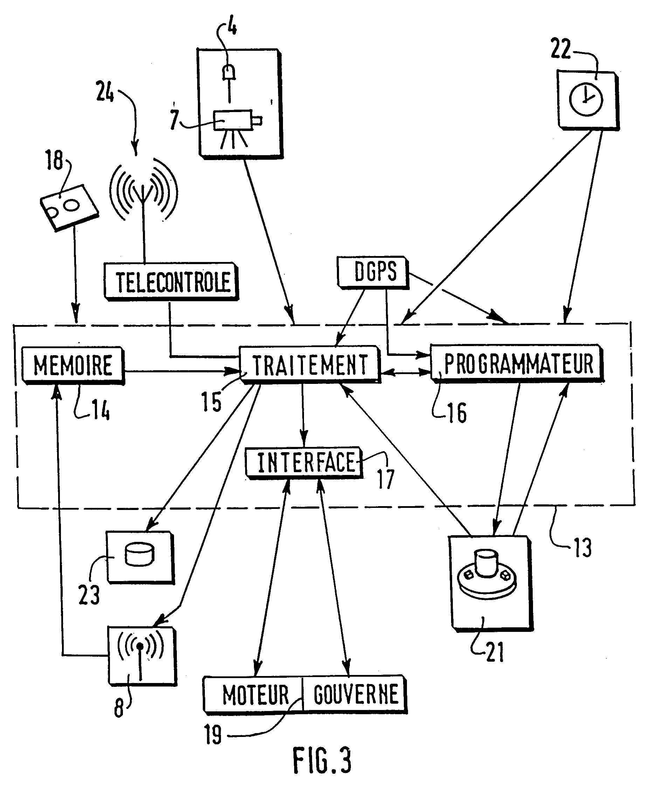

La figure 3 est un schéma bloc des différentes parties fonctionnelles de l'engin nautique de la figure 1.

Sur ce schéma, on retrouve l'antenne 4 du répondeur radar, la caméra 7, le système de positionnement DGPS et les antennes 8.

La partie de ce schéma correspondant à l'automate 13 programmable est délimitée par un trait interrompu.

L'automate programmable comporte une mémoire 14, des moyens de traitement 15, un programmateur 16 et une interface 17.

Dans la mémoire 14, un utilisateur peut mémoriser un parcours à respecter par l'engin nautique pour couvrir un site à sonder.

Ce parcours peut être matérialisé par des données numériques enregistrées sur un disque magnétique 18.

Un tel chargement de la mémoire 14 s'effectue de préférence en début de mission, avant de libérer l'engin nautique selon l'invention.

La mémoire 14 peut également être chargée à distance par liaison radio grâce aux antennes 8.

Le parcours mémorisé dans la mémoire 14 est transmis aux moyens de traitement 15, lesquels déterminent des ordres de pilotage à délivrer à l'interface 17 pour commander les déplacements de l'engin nautique.

L'interface 17 répercute ses ordres au moteur et à la gouverne 19 et récupère en retour des informations d'état permettant de contrôler le bon fonctionnement de ces équipements.

Pour analyser le parcours à respecter, les moyens de traitement 15 utilisent les informations fournies par le système de positionnement DGPS et par les capteurs d'environnement que constituent le radar installé sur le véhicule 11 et la caméra infra-rouge 7 montée sur l'engin nautique 1.

Le répondeur radar de l'engin nautique permet de situer, sur le radar du véhicule 11, et par rapport à l'engin nautique 1, des obstacles relativement importants comme par exemple une bouée 20a, tandis que la caméra infra-rouge 7 permet de détecter la présence d'obstacles plus petits et plus rapprochés comme par exemple un tronc d'arbre 20b ou une planche à voile 20c représentés sur la figure 1.

Des algorithmes classiques de traitement de l'image peuvent être utilisés pour exploiter les images issues de la caméra 7.

Les moyens de traitement 15 exploitent également les données issues du système de positionnement DGPS.

Ainsi, les moyens de traitement 15 déterminent les ordres de pilotage en ayant recours à des algorithmes de prise de décision bien connus qui peuvent par exemple être mis en oeuvre par un système expert.

Le programmateur 16 provoque la prise en compte de mesures fournies par des instruments de mesure 21 à des intervalles de temps prédéterminés, conformément au mode de réalisation préféré déjà décrit.

A cet effet, le programmateur 16 est relié à une horloge 22.

Les instruments de mesure 21 sont associés à une plate-forme accélérométrique et à des moyens de calcul non représentés qui permettent de corriger les mesures en tenant compte du roulis, du tangage, et des variations de hauteur de l'engin nautique.

Le programmateur 16 peut également recevoir de la part du système de positionnement DGPS, la localisation géographique précise de l'engin nautique. En fonction de cette information, le programmateur 16 peut modifier l'intervalle de temps de manière à provoquer la prise en compte plus fréquente de mesures fournies par les instruments de mesure 21.

Simultanément à leur acquisition, les données issues des instruments de mesure 21 sont enregistrées sur un disque dur 23 ou transmises à des moyens logistiques via les antennes radio 8.

Un récepteur 24 est également prévu pour permettre de télécommander l'engin à partir par exemple du véhicule 11 en cas de manoeuvre particulièrement délicate.

Comme déjà expliqué plus haut, la définition du parcours à respecter par l'engin nautique peut être donnée sous la forme d'une suite de points géographiques 25 que l'engin nautique 1 doit successivement rallier et sur le parcours desquels les mesures sont prises en compte par l'automate.

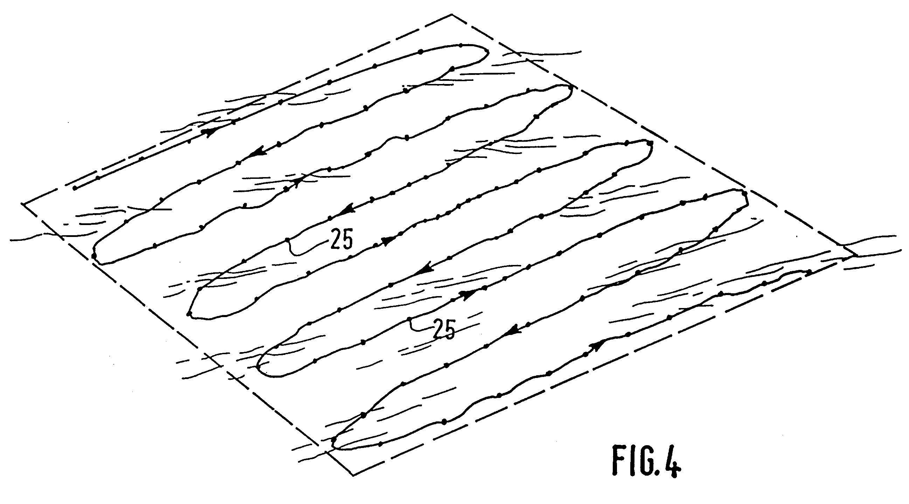

La figure 4 représente une telle trajectoire découpée en segments successifs.

Il est bien entendu que le mode de réalisation qui vient d'être décrit ne présente aucun caractère limitatif et qu'il pourra recevoir toutes modifications désirables sans sortir pour cela du cadre de l'invention.

## Revendications

1. Engin nautique pour effectuer des missions de reconnaissance d'un site, notamment des levés bathymétriques par sondages, comportant une coque flottante à l'intérieur de laquelle sont installés des organes moteurs et directionnels, des moyens de localisation géographiques de l'engin, des instruments de mesure et des moyens pour prendre en compte chaque mesure en association avec l'heure du levé et la situation géographique de l'engin au moment du levé, caractérisé par le fait qu'il comporte un automate programmable (13) comprenant :
- une mémoire (14) apte à mémoriser un parcours couvrant le site (24) à sonder,
- des moyens de traitement (15) qui analysent le parcours enregistré en tenant compte de la position courante de l'engin nautique et d'informations préenregistrées, relatives au site à sonder, et en déduisent des ordres de pilotage de l'engin nautique (1), et
- une interface (17) reliée d'une part aux moyens de traitement (15) et d'autre part aux organes moteurs et directionnels (19) de l'engin, apte à manoeuvrer ces derniers en fonction des ordres de pilotage issus des moyens de traitement (15).

2. Engin nautique selon la revendication 1, caractérisé par le fait que les instruments de mesure (21) comprennent un sondeur acoustique monté fixe par rapport à la coque, une plate-forme pourvue d'inclinomètres et d'accéléromètres qui évaluent en permanence le roulis, le tangage et les variations de hauteur de l'engin nautique, ainsi que des moyens de calcul qui tiennent compte de ces paramètres et corrigent en permanence les valeurs fournies par le sondeur.

3. Engin nautique selon l'une quelconque des revendications 1 et 2, caractérisé par le fait qu'il comporte des capteurs d'environnement (4,12,7) qui lui permettent d'acquérir des informations relatives au site (24) en détectant d'éventuels obstacles (20) se présentant sur sa trajectoire.

4. Engin nautique selon la revendication 3, caractérisé par le fait que les capteurs d'environnement sont un radar (4,12) qui détecte les obstacles de grande dimension et une caméra vidéo qui retransmet les images à une station de contrôle ou une caméra à infra-rouge (7) qui, associée à des appareillages électroniques de traitement de l'image, détecte des obstacles de plus petite dimension (20).

5. Engin nautique selon l'une quelconque des revendications 1 à 4, caractérisé par le fait qu'il comporte un programmateur (16) relié aux instruments de mesure qui provoque la prise en compte de mesures à des intervalles de temps prédéterminés.

6. Engin nautique selon l'une quelconque des revendications 1 à 4, caractérisé par le fait qu'il comporte un programmateur (16) relié aux instruments de mesure qui reçoit en permanence les mesures relevées par les instruments de mesure (21) et qui , si l'écart entre une mesure courante et la dernière mesure prise en compte est supérieur à une valeur limite prédéterminée, provoque la prise en compte de la valeur courante.

7. Engin nautique selon l'une quelconque des revendications 1 à 4, caractérisé par le fait qu'il comporte un programmateur (16) relié aux instruments de mesure et aux moyens de localisation géographique (DGPS) qui provoque la prise en compte de mesures lorsque l'engin nautique (1) se trouve en des points géographiques déterminés à l'avance.

8. Engin nautique selon l'une quelconque des revendications 1 à 7, caractérisé par le fait que le parcours enregistré dans la mémoire (14) de l'automate programmable (13) est matérialisé par une suite de points géographiques (25) que l'engin nautique (1) doit successivement rallier.

## Claims

1. A nautical apparatus to conduct reconnaissance missions of a site, particularly bathymetric surveys by means of sounding, comprising a floating hull, within which are located motor and directional elements, means of geographic localization of the apparatus, measurement instruments, and means for taking into account each measurement in association with the time of the survey and the geographic situation of the apparatus at the time of the survey, characterized in that it has a programmable automatic system (13) comprising :
- a memory (14) which can remember a route covering the site (24) to be sounded,
- processing means (15) which analyze the route recorded, taking into account the current position of the nautical apparatus, and prerecorded information relative to the site to be sounded, and deducing from this piloting commands for the nautical apparatus (1), and
- an interface (17) connected on the one hand with the processing means (15), and on the other hand with the motor and directional elements (19) of the apparatus, and capable of maneuvering the latter as a function of piloting commands issued from the processing means (15).

2. Nautical apparatus as claimed in claim 1, characterized in that the measurement instruments (21) comprise an acoustical sounding device mounted in a fixed position relative to the hull, a platform provided with inclinometers and accelerometers which constantly evaluate the roll, the pitch, and the differences in height of the nautical apparatus, as well as calculating means which take these parameters into account and permanently correct the values provided by the sounding device.

3. Nautical apparatus as claimed in any one of claims 1 and 2, characterized in that it has environmental sensors (4, 12, 7) which allow it to acquire information relating to the site (24), by detecting any obstacles (20) which present themselves on its path.

4. Nautical apparatus as claimed in claim 3, characterized in that the environmental sensors are a radar (4,12) which detects large obstacles and a video camera which transmits its images to a monitoring station, or an infrared camera which, together with electronic equipment for image processing, can detect smaller obstacles (20).

5. Nautical apparatus as claimed in any one of claims 1 to 4, characterized in that it comprises a programming device (16) connected with the measurement instruments and which triggers taking of measurements at predetermined time intervals.

6. Nautical apparatus as claimed in any one of claims 1 to 4, characterized in that it comprises a programming device (16) conneted with the measurement instruments, which permanently receives the measurements taken by the measurement instruments (21), and if the gap between a current measurement and the last measurement taken is greater than a predetermined limit, triggers taking of the current value.

7. Nautical apparatus as claimed in any one of claims 1 to 4, characterized in that it comprises a programming device (16) connected with the measurement instruments and with the geographical localization means (DGPS), which triggers taking of measurements when the nautical apparatus (1) is at geographical points determined in advance.

8. Nautical apparatus as claimed in any one of claims 1 to 7, characterized in that the route recorded in the memory (14) of the programmable automatic system (13) consists of a sequence of geographical points (25) which the nautical apparatus (1) must successively reach.

## Patentansprüche

1. Wasserfahrzeug für Ortserkundungsmissionen, insbesondere von Tiefenpeilungen, mit einem schwimmenden Schiffskörper, in dessen Innerem Antriebs- und Lenkelemente, Einrichtungen zur Erkennung der geographischen Position des Fahrzeugs, Messinstrumente und Einrichtungen zum Berücksichtigen jedes Messwerts in Zusammenhang mit der Zeit der Vermessung und der geographischen Position des Fahrzeugs im Augenblick der Vermessung untergebracht sind, **dadurch gekennzeichnet,** dass es eine automatische, programmierbare Einrichtung (13) mit folgendem aufweist:
- einem Speicher (14), der einen Bahnverlauf einspeichern kann, der den zu peilenden Ort (24) enthält;
- einer Verarbeitungseinrichtung (15), die den aufgezeichneten Bahnverlauf unter Berücksichtigung der aktuellen Position des Wasserfahrzeugs und vorab aufgezeichneter Informationen betreffend den zu peilenden Ort analysiert und die daraus Steuerungsbefehle für das Wasserfahrzeug (1) herleitet; und
- einer Schnittstelle (17), die einerseits mit der Verarbeitungseinrichtung (15) und andererseits mit Antriebs- und Lenkelementen (19) des Fahrzeugs verbunden ist und diese letzteren als Funktion der von der Verarbeitungseinrichtung (15) ausgegebenen Steuerungsbefehlen betreiben kann.

2. Wasserfahrzeug nach Anspruch 1, **dadurch gekennzeichnet,** dass die Messinstrumente (21) eine akustische Peilungseinrichtung, die fest in bezug auf den Schiffskörper angebracht ist, eine mit Neigungsmessinstrumenten und Beschleunigungsmessinstrumenten, die dauernd das Rollen, das Stampfen und Höhenschwankungen des Wasserfahrzeugs auswertet, versehene Plattform wie auch eine Recheneinrichtung umfassen, die diese Parameter berücksichtigt und dauernd die von der Peilungseinrichtung gelieferten Werte korrigiert.

3. Wasserfahrzeug nach einem der Ansprüche 1 oder 2, **dadurch gekennzeichnet,** dass es Umgebungs-Messwertaufnehmer (4, 12, 7) aufweist, die es ihm ermöglichen, Informationen betreffend den Ort (24) dadurch aufzunehmen, dass sie mögliche Hindernisse (20) entlang dem Bahnverlauf aufnehmen.

4. Wasserfahrzeug nach Anspruch 3, **dadurch gekennzeichnet,** dass die Umgebungs-Messwertaufnehmer ein Radar (4, 12), das Hindernisse großer Abmessungen erfasst, und eine Videokamera, die die Bilder an eine Steuerungsstation rücküberträgt, oder eine Infrarotkamera (7) sind, die, in Verbindung mit elektronischen Bildbehandlungsapparaturen, Hindernisse mit kleinerer Abmessung (20) erfasst.

5. Wasserfahrzeug nach einem der Ansprüche 1 bis 4, **dadurch gekennzeichnet,** dass es eine mit den Messinstrumenten verbundene Programmiereinrichtung (16) aufweist, die die Aufnahme von Messwerten mit vorbestimmten Zeitintervallen veranlasst.

6. Wasserfahrzeug nach einem der Ansprüche 1 bis 4, **dadurch gekennzeichnet,** dass es eine mit den Messinstrumenten verbundene Programmiereinrichtung (16) aufweist, die dauernd von den Messinstrumenten (21) aufgenommene Messwerte empfängt und die, wenn die Differenz zwischen einem aktuellen Messwert und dem zuletzt aufgenommenen Messwert größer als ein vorbestimmter Grenzwert ist, die Aufnahme des aktuellen Werts veranlasst.

7. Wasserfahrzeug nach einem der Ansprüche 1 bis 4, **dadurch gekennzeichnet,** dass es eine mit den Messinstrumenten und der Einrichtung zur geometrischen Positionsbestimmung (DGPS) verbundene Programmiereinrichtung (16) aufweist, die die Aufnahme von Messwerten veranlasst, wenn sich das Wasserfahrzeug (1) an vorab bestimmten geographischen Punkten befindet.

8. Wasserfahrzeug nach einem der Ansprüche 1 bis 7, **dadurch gekennzeichnet,** dass der im Speicher (14) der automatischen, programmierbaren Einrichtung (13) aufgezeichnete Bahnverlauf durch eine Folge geographischer Punkte (25) realisiert ist, die das Wasserfahrzeug (1) aufeinanderfolgend verbinden muss.
